# EUROPEAN PATENT SPECIFICATION

(11) **EP 3 376 205 B1**
(45) Date of publication and mention of the grant of the patent: **30.12.2020**
(21) Application number: 16864323.7
(22) Date of filing: 10.11.2016
(51) Int. Cl.: G01N 17/00, B60C 19/00, B60C 23/20, G01M 17/02, B60C 11/24

(54) **TIRE MANAGING METHOD AND TIRE MANAGING APPARATUS**
REIFENVERWALTUNGSVERFAHREN UND REIFENVERWALTUNGSVORRICHTUNG
PROCÉDÉ DE GESTION DE PNEUMATIQUE ET APPAREIL DE GESTION DE PNEUMATIQUE

(30) Priority: 10.11.2015 JP 2015220413
(43) Date of publication of application: 19.09.2018
(73) Proprietor: Bridgestone Corporation, Tokyo 104-8340 (JP)
(72) Inventor: KIMURA Takeshi, Tokyo 104-8340 (JP)
(74) Representative: Oxley, Robin John George
(86) International application number: PCT/JP2016/083413
(87) International publication number: WO 2017/082362

(56) References cited:
- WO-A1-2014/053322
- WO-A1-2015/040745
- DE-A1-102013 220 882
- FR-A1- 2 856 343
- JP-A- 2007 168 671
- JP-A- 2012 116 417
- JP-A- 2014 046 879

## Description

### TECHNICAL FIELD

The present disclosure relates to a tire management method and a tire management apparatus.

### BACKGROUND

For pneumatic tires used in construction and mining vehicles, tire life has conventionally been predicted, for example, by evaluating the amount of wear, the durability, and the like on the basis of information on the tire internal pressure measured by an internal pressure sensor mounted inside the pneumatic tire, information on the vehicle running speed and load applied to the tire obtained from vehicle sensors, and the like. For example, one method for estimating the amount of wear of such a pneumatic tire is a method to estimate the amount of wear of the tire tread from the tire radial acceleration detected using an accelerometer, as in patent literature (PTL) 1. Attention is also drawn to the disclosures of FR2856343, WO2014/053322 and DE10-2013-220882.

### CITATION LIST

### Patent Literature

PTL 1: JP 2013-169816 A

### SUMMARY

### (Technical Problem)

On the other hand, a tire pressure monitoring system (TPMS) is typically used, for example, to monitor the air pressure of a pneumatic tire. The TPMS issues an alarm when the air pressure of the pneumatic tire (tire internal pressure) has dropped more than an allowable range. In such a TPMS, the temperature inside the tire is often measured along with the tire internal pressure.

It would be helpful to use this temperature inside the tire to identify the status of the pneumatic tire accurately, but no conventional technique does so.

An aim of the present invention is to provide a tire management method and a tire management apparatus that can easily identify the usage status of a pneumatic tire on the basis of the temperature inside the tire. (Solution to Problem)

To achieve the aforementioned aim, a tire management method according to the present invention is provided as claimed in claim 1.

To achieve the aforementioned aim, a tire management apparatus according to the present invention is provided as claimed in claim 6.

### (Advantageous Effect)

According to the present invention, a tire management method and a tire management apparatus that can easily identify the usage status of a pneumatic tire on the basis of the temperature inside the tire can be provided.

### BRIEF DESCRIPTION OF THE DRAWINGS

In the accompanying drawings:
FIG. 1 is a block diagram schematically illustrating the structure of a tire management apparatus according to an embodiment of the present invention;
FIG. 2 is a flowchart illustrating a tire management method according to an embodiment of the present disclosure using the tire management apparatus of FIG. 1;
FIG. 3 illustrates the relationship between the average running distance per day and the failure frequency for each one of failure sites 1 to 4; and
FIG. 4 illustrates the detected temperature, reference temperature, and air temperature.

### DETAILED DESCRIPTION

The following describes an embodiment of the present invention with reference to the drawings.

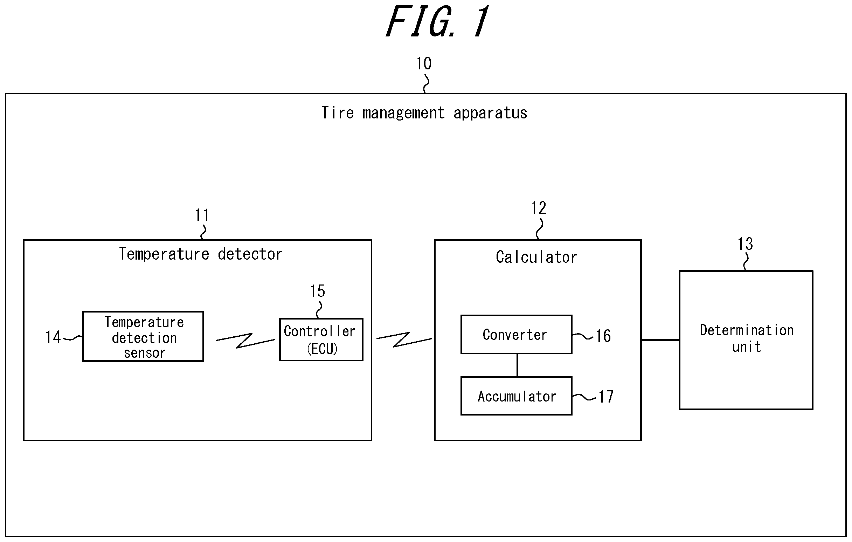

FIG. 1 is a block diagram schematically illustrating the structure of a tire management apparatus according to an embodiment of the present disclosure. As illustrated in FIG. 1, a tire management apparatus 10 according to the present embodiment includes a temperature detector 11, a calculator 12, and a determination unit 13, and manages the current usage status of a pneumatic tire on the basis of information from the calculator 12. In this example, the pneumatic tire is a heavy-duty pneumatic tire (also referred to below simply as a tire), a large-scale pneumatic tire (or tire) used in construction and mining vehicles or the like.

In the present embodiment, the vehicle to which tires managed by the tire management apparatus 10 are attached is a six-wheeled vehicle, with two front wheels and four back wheels. The tires are used in a regular usage pattern by using a new tire for approximately 1/3 of the tire lifespan on a front wheel and then using the tire for the remaining 2/3 on the rear wheel.

The temperature detector 11 includes, for example, a temperature detection sensor 14 that detects the temperature inside the tire air chamber and a controller (ECU) 15 loaded in the vehicle. In the present embodiment, the temperature detection sensor 14 is disposed in each of the vehicle's six tires that are to be managed but need not be disposed in each of the six tires and may instead be disposed in one to fewer than six tires as necessary. These tires may then be managed.

In the present embodiment, the temperature detection sensor 14 is provided as a portion of a tire pressure monitoring system (TPMS) that issues an alarm when determining, on the basis of information on the air pressure or temperature inside the tire, that the air pressure has dropped more than an allowable range. This temperature detection sensor 14 can also detect air pressure along with the temperature.

The present embodiment uses six temperature detection sensors 14 and the controller 15 for transmission, by wireless communication, to the controller 15 of information on at least the temperature inside the tire as detected by the six temperature detection sensors 14.

Here, I confirmed that the temperature detected by the TPMS is not largely caused by heat of the upper portion of the tire belt. Rather, it is clear from the results of detailed temperature measurements of a tire that the TPMS mainly detects the temperature caused by heat of the tire case. Hence, I have used the temperature of the tire case detected by the TPMS.

One of the six temperature detection sensors 14 is mounted inside the tire air chamber in each tire on the vehicle (six wheels, i.e. two front wheels and four back wheels), for example on the tire inner surface, the rim base, or the like. As information related to the temperature caused by heat of the tire case, each temperature detection sensor 14 detects the temperature at predetermined intervals inside the tire air chamber of a pneumatic tire on the vehicle. A belt and carcass are included in the tire case from which the detected temperature is acquired. For durability, the sensor is preferably mounted at a location on the inner side surface of the tire bead core.

The controller (ECU) 15 in the present embodiment outputs temperature information detected at predetermined intervals inside the tire air chamber of six tires, as input from the six temperature detection sensors 14, to the calculator 12 by wireless communication (for example, 3G, Wi-Fi, or the like).

The calculator 12 has a converter 16 and an accumulator 17, uses the converter 16 to convert the temperature information, input to the calculator 12, that was detected at predetermined intervals inside the tire air chamber of the tires, and uses the accumulator 17 to accumulate the result.

In the present embodiment, the converter 16 is provided in advance with unique conversion formulas and converts the temperature information detected by each temperature detection sensor 14 at predetermined intervals inside the tire air chamber into a tire ton-km per hour (TKPH) rating system, which is a multiplication value that is the product of the load (average load) and speed (average speed) of the tire, or into tire T²KPH, which is a multiplication value that is the product of the load squared (average load squared) and the speed (average speed) of the tire. As the conversion formulas, a front tire conversion formula is used for the front tires and a rear tire conversion formula is used for the rear tires.

The unique conversion formula provided in the converter 16 is, for example, based on vehicle type, tire type, tire size, tire tread pattern, tire case structure, or the like but is not limited to these examples.

In the present embodiment, the front tire conversion formula and rear tire conversion formula are each based on either tire TKPH or tire T²KPH, for example as follows.

### <Front tire conversion formula>

$TKPH = \left(detected temperature-α\right) / β$ ${T}^{2} KPH = \left(detected temperature-γ\right) / δ$

### <Rear tire conversion formula>

$TKPH = \left(detected temperature-ε\right) / ξ$ ${T}^{2} KPH = \left(detected temperature-η\right) / σ$

Here, α, β, γ, δ, ε, ξ, η, and σ are coefficients based on the vehicle type, tire type, tire size, tire tread pattern, tire case structure, and the like listed above as examples.

The reason for using different conversion formulas for the front tires and the rear tires is that the load differs on the front and back tires for tires typically mounted on a vehicle, in particular for heavy-duty tires used in construction and mining vehicles.

In the present embodiment, the accumulator 17 accumulates, for a predetermined period, the multiplication value input from the converter 16, i.e. the value converted into tire TKPH or tire T²KPH. The accumulation for a predetermined period is, for example, carried out by accumulating the value detected at each fixed time interval over a predetermined period.

This accumulator 17 first calculates the accumulation for a predetermined period during front mounting of the corresponding tire, i.e. during use as a front tire, and records the front accumulation result.

Next, the accumulator 17 calculates the accumulation for a predetermined period during rear mounting of the corresponding tire, i.e. during use as a rear tire, and records the rear accumulation result. Subsequently, the accumulator 17 adds the front accumulation result and the rear accumulation result to obtain an addition result from the start of use of the corresponding tire until the present and outputs this addition result to the determination unit 13. The accumulator 17 performs the aforementioned addition process to obtain the addition result from the start of use of the corresponding tire until the present for all six tires and outputs the addition result for each of the six tires to the determination unit 13.

On the basis of the addition result of a managed tire as input from the accumulator 17, the determination unit 13 determines the current status of the corresponding tire. The determination may, for example, be made by preparing data on the tire lifespan (tire life) assumed in advance for the tire and then presenting, as the determination result, the current tire usage status derived from the addition result on the basis of the data, such as whether continued use is possible or the predicted length of time that use can be continued.

In the present embodiment, the calculator 12 and the determination unit 13 are, for example, implemented as functional components constituted by a computer for vehicle control loaded in a vehicle. The tire condition is managed on the basis of the determination in the computer for vehicle control.

In this way, the tire management apparatus of the present embodiment can easily identify the usage status of the pneumatic tire on the basis of the temperature of the air inside the tire air chamber. This temperature of the air inside the tire air chamber can be obtained from information from the TPMS provided in the vehicle.

Next, a tire management method according to the tire management apparatus 10 of the present embodiment is described.

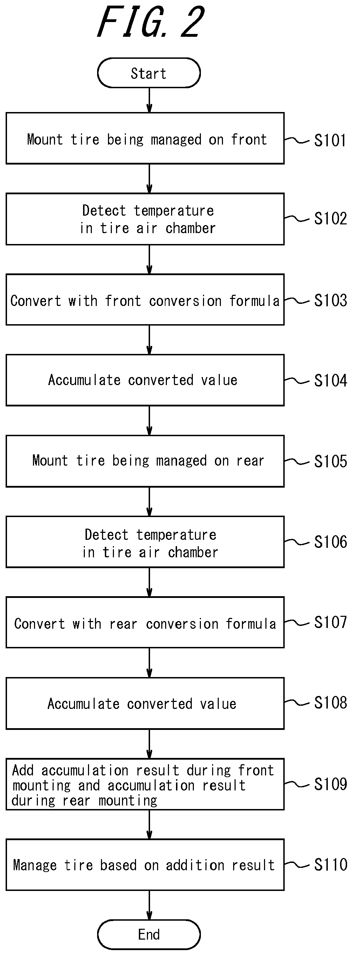

FIG. 2 is a flowchart illustrating a tire management method according to an embodiment of the present disclosure using the tire management apparatus of FIG. 1. As illustrated in FIG. 2, first, a heavy-duty pneumatic tire being managed by the tire management apparatus 10 is attached to the front left side, for example, of a vehicle (step S101) and used as a front tire. This vehicle has six tires, two on the front wheels and four on the back wheels. The tire being managed is a new tire and is used in a regular usage pattern by being used for approximately 1/3 of the tire lifespan on a front wheel and then being used for the remaining 2/3 on a rear wheel.

Next, in temperature detector 11, the temperature is detected at predetermined intervals inside the tire air chamber of the tire being managed using the temperature detection sensor 14, of the TPMS, embedded in the tire being managed (front tire) (step S102). The detected temperature information is output to the calculator 12 through the controller (ECU) 15 by wireless communication.

Next, in the calculator 12, a front tire conversion formula is used to convert the temperature detected by the temperature detector 11 at predetermined intervals inside the tire air chamber into a multiplication value that is the product of load applied to the tire and tire speed or a multiplication value that is the product of the square of load applied to the tire and tire speed (step S103), the converted multiplication value is accumulated for a predetermined period (step S104), and the accumulation result is recorded as the front accumulation result.

Subsequently, after the heavy-duty pneumatic tire being managed is used for approximately 1/3 of the tire life on a front wheel, the tire is attached to the rear left side, for example, of the vehicle (step S105) and used as a rear tire.

Next, in the temperature detector 11, the temperature is detected at predetermined intervals inside the tire air chamber of the tire being managed using the temperature detection sensor 14, of the TPMS, embedded in the tire being managed (rear tire) (step S106). The detected temperature information is output to the calculator 12 through the controller (ECU) 15 by wireless communication.

Next, in the calculator 12, a rear tire conversion formula is used to convert the temperature detected by the temperature detector 11 at predetermined intervals inside the tire air chamber into a multiplication value that is the product of load applied to the tire and tire speed or a multiplication value that is the product of the square of load applied to the tire and tire speed (step S107), the converted multiplication value is accumulated for a predetermined period (step S108), and the accumulation result is recorded as the rear accumulation result.

Subsequently, the front accumulation result that is the accumulation result during front mounting and the rear accumulation result that is the accumulation result during rear mounting are added for the tire being managed (step S109). In this way, the addition result of the multiplication values from the start of use of the tire being managed until the present can be obtained. The obtained addition result is output to the determination unit 13.

The determination unit 13 prepares data on the lifespan (tire life) assumed in advance for the tire being managed and presents, as the determination result, the current tire usage status derived from the addition result on the basis of the data, such as whether continued use as possible or the predicted length of time that use can be continued. The determination unit 13 may present the determination result for all of the tires being managed, i.e. for all six tires mounted on the vehicle in the tire management method of the present embodiment.

With the tire management method of the present embodiment, the determination result of the determination unit 13 thus reveals how much longer a tire can be used and what the remaining tire lifespan (tire life) is at the current time for the current usage status of the tire. Therefore, by determining that the tire usage limit is near when the sum of front wheel use and rear wheel use becomes a preset value of higher, for example, the subsequent tire lifespan can be predicted, and the assumed remaining usage time can be presented.

In other words, the tire management apparatus 10 of the present embodiment can implement the tire management method of the present embodiment, can obtain information on the temperature inside the tire air chamber from temperature/pressure data of the tire being managed, which is monitored in real time by a TPMS, and can easily identify the current usage status of the tire on the basis of the information on the temperature inside the tire air chamber. Accordingly, a tire management method for effectively managing a tire in accordance with the usage status can be achieved.

In the present embodiment, the vehicle to which tires being managed are attached is not limited a six-wheeled vehicle and may, for example, be a four-wheeled vehicle. Also, instead of managing tires on all six wheels, tires may be managed one wheel at a time. The tire being managed is not limited to being used on a back wheel after being used on a front wheel and may instead be used only in the same position. The coefficients used in the front tire conversion formula and the rear tire conversion formula may be corrected using internal pressure based on data on various internal pressures inside the tire air chamber.

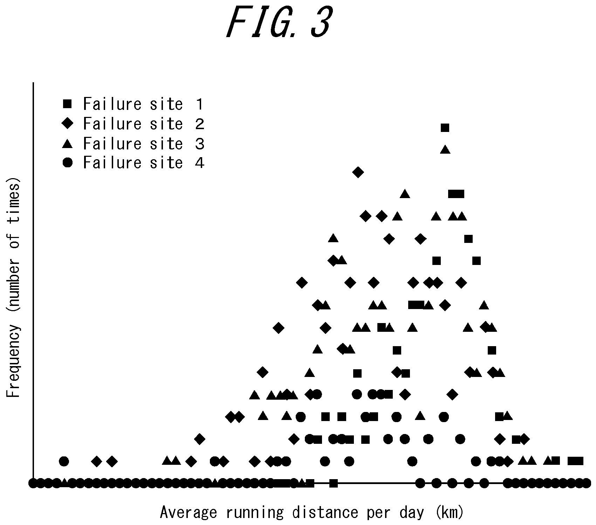

FIG. 3 illustrates the relationship between the average running distance per day and the failure frequency for each one of failure sites 1 to 4. As illustrated in FIG. 3, the average running distance per day and the failure frequency are correlated. For example, for failure site 1, the frequency of occurrence is low (no occurrence in FIG. 3) when the average running distance per day is sort. Therefore, when the average running distance per day is short, failure sites 2 to 4 can be considered as sites with possible failure. Normally, the speed (average speed) for calculating TKPH or T²KPH is calculated by dividing the average running distance per day by 24 hours. Therefore, TKPH or T²KPH and the failure site are correlated. Furthermore, the TKPH or T²KPH calculated with the aforementioned conversion formulas and the failure site are also correlated. Accordingly, in the apparatus of the present disclosure, the determination unit 13 is preferably configured to determine a predicted failure site of a pneumatic tire on the basis of the aforementioned sum and a failure map, prepared in advance, indicating the relationship between the aforementioned sum and one or more failure sites. This is because the site of predicted failure can easily be identified on the basis of the temperature inside the tire. Similarly, in the method of the present disclosure, the determination unit 13 preferably determines a predicted failure site of a pneumatic tire on the basis of the aforementioned sum and a failure map, prepared in advance, indicating the relationship between the aforementioned sum and one or more failure sites.

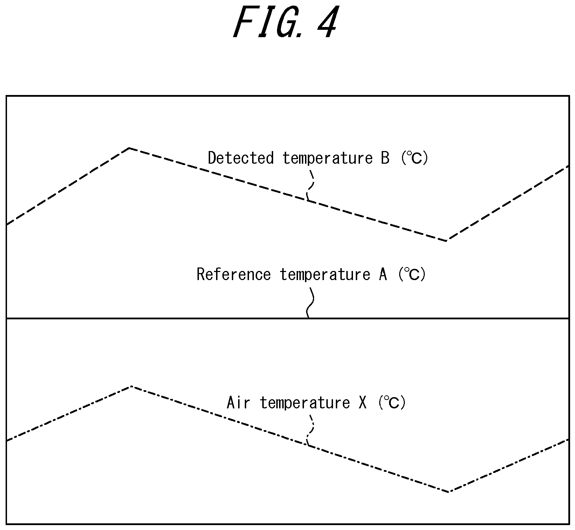

FIG. 4 illustrates the detection temperature, reference temperature, and air temperature. In the present disclosure, the detected temperature can be corrected using the air temperature at the point in time when the temperature is detected. In other words, as illustrated schematically in FIG. 4, it is thought that the actual temperature is detected higher or lower depending on whether the air temperature is high or low. Therefore, using the following formula, for example, a corrected temperature is preferably used instead of the detected temperature. $corrected temperature = detected temperature B \left(°C\right) + \left(\left(reference temperature A\left(°C\right)-air temperature X\left(°C\right)\right)\right)$

### REFERENCE SIGNS LIST

- 10: Tire management apparatus
- 11: Temperature detector
- 12: Calculator
- 13: Determination unit
- 14: Temperature detection sensor
- 15: Controller (ECU)
- 16: Converter
- 17: Accumulator

## Claims

1. A tire management method comprising:
detecting, with a temperature detector (11), a temperature at predetermined intervals inside a tire air chamber of a pneumatic tire on a vehicle;
calculating, with a converter (16), based on the temperature detected at predetermined intervals inside the tire air chamber, a value which is equal to a first multiplication value that is the product of load applied to the tire and tire speed or a second multiplication value that is the product of the square of load applied to the tire and tire speed, using a formula which relates detected temperature to a first multiplication value that is the product of load applied to the tire and tire speed or to a second multiplication value that is the product of the square of load applied to the tire and tire speed; and
calculating, with an accumulator (17), an accumulation value by accumulating the first multiplication value or the second multiplication value for a predetermined period.

2. The tire management method of claim 1, further comprising calculating, with the accumulator (17), a sum by adding the accumulation value for the predetermined period during front mounting and the accumulation value for the predetermined period during rear mounting.

3. The tire management method of claim 2, further comprising determining, with a determination unit (13), a usage status of the pneumatic tire from the sum on the basis of tire life data prepared in advance.

4. The tire management method of claim 3, wherein with the determination unit (13), a predicted failure site of the pneumatic tire is determined on the basis of:
the sum, and
a failure map, prepared in advance, indicating a relationship between the sum and one or more failure sites.

5. The tire management method of claim 1, wherein the pneumatic tire is a heavy-duty pneumatic tire.

6. A tire management apparatus (10) comprising:
a temperature detector (11) configured to detect a temperature at predetermined intervals inside a tire air chamber of a pneumatic tire on a vehicle, **characterized by**
a converter (16) configured to calculate, using the temperature detected by the temperature detector (11) at predetermined intervals inside the tire air chamber, a value which is equal to a first multiplication value that is the product of load applied to the tire and tire speed or a second multiplication value that is the product of the square of load applied to the tire and tire speed, using a formula which relates detected temperature to a first multiplication value that is the product of load applied to the tire and tire speed or to a second multiplication value that is the product of the square of load applied to the tire and tire speed; and
an accumulator (17) configured to calculate an accumulation value by accumulating the first multiplication value or the second multiplication value for a predetermined period.

7. The tire management apparatus (10) of claim 6, wherein the accumulator (17) is configured to calculate a sum by adding the accumulation value for the predetermined period during front mounting and the accumulation value for the predetermined period during rear mounting.

8. The tire management apparatus (10) of claim 7, wherein the determination unit (13) is configured to determine a usage status of the pneumatic tire from the sum on the basis of tire life data prepared in advance.

9. The tire management apparatus (10) of claim 8, wherein the determination unit (13) is configured to determine a predicted failure site of the pneumatic tire on the basis of:
the sum, and
a failure map, prepared in advance, indicating a relationship between the sum and one or more failure sites.

10. The tire management apparatus (10) of claim 6, wherein the pneumatic tire is a heavy-duty pneumatic tire.

## Patentansprüche

1. Reifenverwaltungsverfahren, Folgendes umfassend:
Detektieren, mit einem Temperaturdetektor (11), einer Temperatur in vorbestimmten Intervallen innerhalb einer Reifenluftkammer eines Luftreifens an einem Fahrzeug;
Berechnen, mit einem Umwandler (16), basierend auf der in vorbestimmten Intervallen innerhalb der Reifenluftkammer detektierten Temperatur, eines Wertes, welcher gleich einem ersten Multiplikationswert ist, welcher das Produkt aus einer auf den Reifen aufgebrachten Last und einer Reifengeschwindigkeit ist, oder einem zweiten Multiplikationswert, welcher das Produkt des Quadrates einer auf den Reifen aufgebrachten Last und einer Reifengeschwindigkeit ist, unter Verwendung einer Formel, welche eine detektierte Temperatur mit einem ersten Multiplikationswert in Verbindung bringt, welcher das Produkt einer auf den Reifen aufgebrachten Last und einer Reifengeschwindigkeit ist, oder mit einem zweiten Multiplikationswert, welcher das Produkt des Quadrates einer auf den Reifen aufgebrachten Last und einer Reifengeschwindigkeit ist; und
Berechnen, mit einem Akkumulator (17), eines Akkumulationswertes durch Akkumulieren des ersten Multiplikationswertes oder des zweiten Multiplikationswertes über einen vorbestimmten Zeitraum.

2. Reifenverwaltungsverfahren nach Anspruch 1, ferner umfassend Berechnen, mit dem Akkumulator (17), einer Summe durch Hinzufügen des Akkumulationswertes für den vorbestimmten Zeitraum während der Montage vorn und des Akkumulationswertes für den vorbestimmten Zeitraum während der Montage hinten.

3. Reifenverwaltungsverfahren nach Anspruch 2, ferner umfassend Bestimmen, mit einer Bestimmungseinheit (13), eines Nutzungsstatus des Luftreifens anhand der Summe auf der Grundlage von im Voraus vorbereiteten Reifenlebensdauer-Daten.

4. Reifenverwaltungsverfahren nach Anspruch 3, wobei mit der Bestimmungseinheit (13) eine vorhergesagte Ausfallstelle des Luftreifens auf folgender Grundlage bestimmt wird:
der Summe, und
einer Ausfallkarte, welche im Voraus vorbereitet wurde, welche eine Beziehung zwischen der Summe und einer oder mehreren Ausfallstellen angibt.

5. Reifenverwaltungsverfahren nach Anspruch 1, wobei der Luftreifen ein Schwerlastluftreifen ist.

6. Reifenverwaltungsgerät (10), Folgendes umfassend:
einen Temperaturdetektor (11), welcher konfiguriert ist, um eine Temperatur in vorbestimmten Intervallen innerhalb einer Reifenluftkammer eines Luftreifens an einem Fahrzeug zu detektieren, **gekennzeichnet durch**:
einen Umwandler (16), welcher konfiguriert ist zum Berechnen, basierend auf der durch den Temperaturdetektor (11) in vorbestimmten Intervallen innerhalb der Reifenluftkammer detektierten Temperatur, eines Wertes, welcher gleich einem ersten Multiplikationswert ist, welcher das Produkt aus einer auf den Reifen aufgebrachten Last und einer Reifengeschwindigkeit ist, oder einem zweiten Multiplikationswert, welcher das Produkt des Quadrates einer auf den Reifen aufgebrachten Last und einer Reifengeschwindigkeit ist, unter Verwendung einer Formel, welche eine detektierte Temperatur mit einem ersten Multiplikationswert in Verbindung bringt, welcher das Produkt einer auf den Reifen aufgebrachten Last und einer Reifengeschwindigkeit ist, oder mit einem zweiten Multiplikationswert, welcher das Produkt des Quadrates einer auf den Reifen aufgebrachten Last und einer Reifengeschwindigkeit ist; und
einen Akkumulator (17), welcher konfiguriert ist, um einen Akkumulationswert durch Akkumulieren des ersten Multiplikationswertes oder des zweiten Multiplikationswertes über einen vorbestimmten Zeitraum zu berechnen.

7. Reifenverwaltungsgerät (10) nach Anspruch 6, wobei der Akkumulator (17) konfiguriert ist, um eine Summe durch Hinzufügen des Akkumulationswertes für den vorbestimmten Zeitraum während der Montage vorn und des Akkumulationswertes für den vorbestimmten Zeitraum während der Montage hinten zu berechnen.

8. Reifenverwaltungsgerät (10) nach Anspruch 7, wobei die Bestimmungseinheit (13) konfiguriert ist, um einen Nutzungsstatus des Luftreifens anhand der Summe auf der Grundlage von im Voraus vorbereiteten Reifenlebensdauer-Daten zu bestimmen.

9. Reifenverwaltungsgerät (10) nach Anspruch 8, wobei die Bestimmungseinheit (13) konfiguriert ist, um eine vorhergesagte Ausfallstelle des Luftreifens auf folgender Grundlage zu bestimmen:
der Summe, und
einer Ausfallkarte, welche im Voraus vorbereitet wurde, welche eine Beziehung zwischen der Summe und einer oder mehreren Ausfallstellen angibt.

10. Reifenverwaltungsgerät (10) nach Anspruch 6, wobei der Luftreifen ein Schwerlastluftreifen ist.

## Revendications

1. Procédé de gestion de pneumatique comprenant :
la détection, au moyen d'un détecteur de température (11), d'une température à des intervalles prédéterminés à l'intérieur d'une chambre à air de pneumatique d'un pneumatique sur un véhicule ;
le calcul, au moyen d'un convertisseur (16), sur la base de la température qui est détectée à des intervalles prédéterminés à l'intérieur de la chambre à air de pneumatique, d'une valeur qui est égale à une première valeur de multiplication qui est le produit d'une charge qui est appliquée sur le pneumatique et d'une vitesse de pneumatique ou à une seconde valeur de multiplication qui est le produit du carré de la charge qui est appliquée sur le pneumatique et de la vitesse de pneumatique, en utilisant une formule qui rapporte une température détectée à une première valeur de multiplication qui est le produit de la charge qui est appliquée sur le pneumatique et de la vitesse de pneumatique ou à une seconde valeur de multiplication qui est le produit du carré de la charge qui est appliquée sur le pneumatique et de la vitesse de pneumatique ; et
le calcul, au moyen d'un accumulateur (17), d'une valeur d'accumulation en accumulant la première valeur de multiplication ou la seconde valeur de multiplication sur une période prédéterminée.

2. Procédé de gestion de pneumatique selon la revendication 1, comprenant en outre le calcul, au moyen de l'accumulateur (17), d'une somme en ajoutant la valeur d'accumulation sur la période prédéterminée pendant le montage avant et la valeur d'accumulation sur la période prédéterminée pendant le montage arrière.

3. Procédé de gestion de pneumatique selon la revendication 2, comprenant en outre la détermination, au moyen d'une unité de détermination (13), d'un état d'utilisation du pneumatique à partir de la somme sur la base de données de durée de vie de pneumatique qui sont préparées à l'avance.

4. Procédé de gestion de pneumatique selon la revendication 3, dans lequel, au moyen de l'unité de détermination (13), un site de défaillance prédite du pneumatique est déterminé sur la base :
de la somme ; et
d'une carte de défaillances, préparée à l'avance, qui indique une relation entre la somme et un ou plusieurs sites de défaillance.

5. Procédé de gestion de pneumatique selon la revendication 1, dans lequel le pneumatique est un pneumatique poids-lourd.

6. Appareil de gestion de pneumatique (10) comprenant :
un détecteur de température (11) qui est configuré pour détecter une température à des intervalles prédéterminés à l'intérieur d'une chambre à air de pneumatique d'un pneumatique sur un véhicule, **caractérisé par** ;
un convertisseur (16) qui est configuré pour calculer, en utilisant la température qui est détectée par le détecteur de température (11) à des intervalles prédéterminés à l'intérieur de la chambre à air de pneumatique, une valeur qui est égale à une première valeur de multiplication qui est le produit d'une charge qui est appliquée sur le pneumatique et d'une vitesse de pneumatique ou à une seconde valeur de multiplication qui est le produit du carré de la charge qui est appliquée sur le pneumatique et de la vitesse de pneumatique, en utilisant une formule qui rapporte une température détectée à une première valeur de multiplication qui est le produit de la charge qui est appliquée sur le pneumatique et de la vitesse de pneumatique ou à une seconde valeur de multiplication qui est le produit du carré de la charge qui est appliquée sur le pneumatique et de la vitesse de pneumatique ; et
un accumulateur (17) qui est configuré pour calculer une valeur d'accumulation en accumulant la première valeur de multiplication ou la seconde valeur de multiplication sur une période prédéterminée.

7. Appareil de gestion de pneumatique (10) selon la revendication 6, dans lequel l'accumulateur (17) est configuré pour calculer une somme en ajoutant la valeur d'accumulation sur la période prédéterminée pendant le montage avant et la valeur d'accumulation sur la période prédéterminée pendant le montage arrière.

8. Appareil de gestion de pneumatique (10) selon la revendication 7, dans lequel l'unité de détermination (13) est configurée pour déterminer un état d'utilisation du pneumatique à partir de la somme sur la base de données de durée de vie de pneumatique qui sont préparées à l'avance.

9. Appareil de gestion de pneumatique (10) selon la revendication 8, dans lequel l'unité de détermination (13) est configurée pour déterminer un site de défaillance prédite du pneumatique sur la base :
de la somme ; et
d'une carte de défaillances, préparée à l'avance, qui indique une relation entre la somme et un ou plusieurs site(s) de défaillance.

10. Appareil de gestion de pneumatique (10) selon la revendication 6, dans lequel le pneumatique est un pneumatique poids-lourd.
